# EUROPEAN PATENT APPLICATION

(11) **EP 4 629 009 A1**
(43) Date of publication of application: **08.10.2025**
(21) Application number: 25161869.0
(22) Date of filing: 05.03.2025
(51) Int. Cl.: G05B 23/02, G06N 20/00

(54) **SYSTEM AND METHOD FOR PERFORMING FAULT AND EVENT ANALYSIS IN ELECTRICAL SUBSTATIONS**

(30) Priority: 05.04.2024 IN 202441028354
(71) Applicant: ABB SCHWEIZ AG, 5400 Baden (CH)
(72) Inventor: PAL, Mayukha, 502032 Sangareddy (IN); NAYAK, Sidharthenee, 753009 Cuttack (IN); DWIVEDI, Divyanshi, 500056 Secunderabad (IN); KRONMAN, Dick, 65300 Vaasa (FI); KULATHU, Ganesh, 560098 Bengaluru (IN); BHENDE, Chandrashekhar Narayan, 752050 Khordha (IN); YEMULA, Pradeep Kumar, 502285 Sangareddy (IN); PANIGRAHI, Prasanta Kumar, 754111 Cuttack (IN)
(74) Representative: Zimmermann & Partner Patentanwälte mbB

(57) **Abstract**

The present disclosure describes a system and method performing fault and event analysis in electrical substations is disclosed. The method comprises the step of receiving a disturbance record triggered by an intelligent electronic device (IED) at an electrical substation, preprocessing the received disturbance record to extract at least one variable time series data of plurality of electrical parameters, generating a causality matrix based on the extracted at least one variable time series data by applying causal analysis, predicting, using a Machine learning (ML) module, a fault type at least based on the causality matrix, retrieving, from a knowledge database, a plurality of probable causes corresponding to the predicted fault type, determining at least one exact cause from the plurality of probable causes based on the causal pattern, and providing the fault type, the plurality of probable causes, and the at least one exact cause to a user.

## Description

### TECHNICAL FIELD

The present disclosure generally relates to fault and event analysis and more particularly, relates to systems and methods for performing fault and event analysis in electrical substations.

### BACKGROUND

Substation facilities are necessary to transmit power generated by a power plant through a line and distribute it to consumers, such as homes, by boosting and stepping down for power efficiency, and to support it. Substation facilities include peripheral voltage transformers, substation transformers, current transformers, and protection relays, etc.

Electrical substations interconnection, scale, and operation structure are constantly growing, and the losses caused by faults are often huge. Due to the influence of various factors such as weather, man-made, installations, etc., the occurrence of faults is inevitable. As the scale of the power system continues to expand, the operating mechanism and structure of the system become more and more complicated, and it is difficult to judge and control faults only by traditional techniques.

Thus, fault analysis in substations can be characterized as intricate, burdensome, time-consuming, and reliant on manual processes. The complexity of the analysis process increases when dealing with larger and more sensitive faults, primarily due to the need to process a larger and more extensive dataset.

Whenever a fault occurs, specialists and experts are required to shift, co-relate, analyze, and conclude with consistency by using the system data like alarm and events, disturbance or fault records, measurement reports, device settings, electrical single line diagrams, etc. This increases difficulty in correctly judging the fault and the root cause of the fault.

In view of the foregoing discussion, there exists a need in the art to provide a method and a system which overcomes the stated problems by efficiently fault and event analysis in electrical substations.

The information disclosed in this background of the disclosure section is only for enhancement of understanding of the general background of the invention and should not be taken as an acknowledgement or any form of suggestion that this information forms the prior art already known to a person skilled in the art.

### SUMMARY

The present disclosure overcomes one or more shortcomings of the prior art and provides additional advantages discussed throughout the present disclosure. Additional features and advantages are realized through the techniques of the present disclosure. Other embodiments and aspects of the disclosure are described in detail herein and are considered a part of the claimed disclosure.

In a non-limiting embodiment of the present disclosure, a method for performing fault and event analysis in electrical substations is disclosed. The method comprises the step of receiving a disturbance record triggered by an intelligent electronic device (IED) at an electrical substation, extracting at least one variable time series data of plurality of electrical parameters based on the received disturbance record, the plurality of electrical parameters at least comprising a parameter contributing to a fault or an event, and generating a causality matrix based on the extracted at least one variable time series data by applying causal analysis. The causality matrix comprises a causal pattern indicating a weight percentage and direction of correlation of each electrical parameter with other electrical parameters. The method then discloses predicting, using a Machine learning (ML) module, a fault type at least based on the causality matrix, and retrieving, from a knowledge database, a plurality of probable causes corresponding to the predicted fault type. The method finally discloses determining at least one exact cause from the plurality of probable causes based on the causal pattern and providing the fault type, the plurality of probable causes, and the at least one exact cause to a user.

In another embodiment of the present disclosure, a system for performing fault and event analysis in electrical substations is disclosed. The system includes a memory and at least one processor coupled to the memory. The at least one processor is configured to receive a disturbance record triggered by an intelligent electronic device (IED) at an electrical substation, extract at least one variable time series data of plurality of electrical parameters based on the received disturbance record, the plurality of electrical parameters at least comprising a parameter contributing to a fault or an event, generate a causality matrix based on the extracted at least one variable time series data by applying causal analysis. The causality matrix comprises a causal pattern indicating a weight percentage and direction of correlation of each electrical parameter with other electrical parameters. The at least one processor is then configured to predict, using a Machine learning (ML) module, a fault type at least based on the causality matrix, retrieve, from a knowledge database, a plurality of probable causes corresponding to the predicted fault type. The at least one processor is finally configured to determine at least one exact cause from the plurality of probable causes based on the causal pattern and provide the fault type, the plurality of probable causes, and the at least one exact cause to a use.

The foregoing summary is illustrative only and is not intended to be in any way limiting. In addition to the illustrative aspects, embodiments, and features described above, further aspects, embodiments, and features will become apparent by reference to the drawings and the following detailed description.

### BRIEF DESCRIPTION OF THE DRAWINGS

The accompanying drawings, which are incorporated in and constitute a part of this disclosure, illustrate exemplary embodiments and, together with the description, serve to explain the disclosed principles. The same numbers are used throughout the figures to reference like features and components. Some embodiments of systems and or methods in accordance with embodiments of the present subject matter are now described, by way of example only, and with reference to the accompanying drawings, in which:
**FIG. 1** illustrates an exemplary environment for performing fault and event analysis in electrical substations, in accordance with an embodiment of the present disclosure;
**FIG. 2(a)** illustrates logic flow for performing fault and event analysis in electrical substations, in accordance with an embodiment of the present disclosure;
**FIG. 2(b)** illustrates a disturbance record received from an electrical substation, in accordance with an embodiment of the present disclosure;
**FIG. 2(c)** illustrates electrical signals/parameters retrieved/extracted from disturbance record received from an electrical substation, in accordance with an embodiment of the present disclosure;
**FIG. 2(d)** illustrates Granger causality plot and causality network constructed from the electrical signals/parameters present in the disturbance record, in accordance with an embodiment of the present disclosure;
**FIG. 3** illustrates a block diagram representation of system for performing fault and event analysis in electrical substations, in accordance with another embodiment of the present disclosure;
**FIG. 4** is a flowchart illustrating a method for performing fault and event analysis in electrical substations, in accordance with an embodiment of the present disclosure; and
**FIG. 5** is a flowchart illustrating a method of training a machine learning model/module for predicting the fault type, in accordance with an embodiment of the present disclosure.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and executed by a computer or processor, whether or not such computer or processor is explicitly shown.

### DETAILED DESCRIPTION

In the present document, the word "exemplary" is used herein to mean "serving as an example, instance, or illustration". Any embodiment or implementation of the present subject matter described herein as "exemplary" is not necessarily to be construed as preferred or advantageous over other embodiments.

While the disclosure is susceptible to various modifications and alternative forms, specific embodiment thereof has been shown by way of example in the drawings and will be described in detail below. It should be understood, however that it is not intended to limit the disclosure to the particular forms disclosed, but on the contrary, the disclosure is to cover all modifications, equivalents, and alternative falling within the spirit and the scope of the disclosure.

The terms "comprises", "comprising", or any other variations thereof, are intended to cover a non-exclusive inclusion, such that a setup, device, or method that comprises a list of components or steps does not include only those components or steps but may include other components or steps not expressly listed or inherent to such setup or device or method. In other words, one or more elements in a device or system or apparatus proceeded by "comprises... a" does not, without more constraints, preclude the existence of other elements or additional elements in the device or system or apparatus.

In the following detailed description of the embodiments of the disclosure, reference is made to the accompanying drawings that form a part hereof, and in which are shown by way of illustration specific embodiments in which the disclosure may be practiced. These embodiments are described in sufficient detail to enable those skilled in the art to practice the disclosure, and it is to be understood that other embodiments may be utilized and that changes may be made without departing from the scope of the present disclosure. The following description is, therefore, not to be taken in a limiting sense.

The terminologies "substation", "electrical substation", "digital substation", and "power plant" have been interchangeably used throughout the specification.

The terminologies "knowledge base" and "knowledge database" have been interchangeably used throughout the specification.

The terminologies "rules engine", "rules-based engine" and "rules-based engine unit" have been interchangeably used throughout the specification.

The terminologies "model", "machine learning based model", and "ML Module" have been interchangeably used throughout the specification.

The present disclosure describes a method performing fault and event analysis in electrical substations is disclosed. The method comprises the step of receiving a disturbance record triggered by an intelligent electronic device (IED) at an electrical substation, extracting at least one variable time series data of plurality of electrical parameters based on the received disturbance record, generating a causality matrix based on the extracted at least one variable time series data by applying causal analysis, predicting, using a Machine learning (ML) module, a fault type at least based on the causality matrix, retrieving, from a knowledge database, a plurality of probable causes corresponding to the predicted fault type, determining at least one exact cause from the plurality of probable causes based on the causal pattern, and providing the fault type, the plurality of probable causes, and the at least one exact cause to a user.

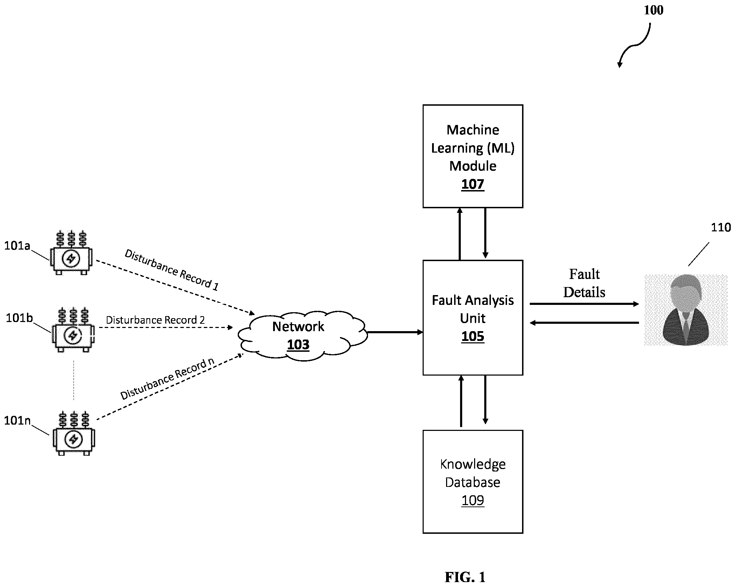

**FIG. 1** illustrates an exemplary environment for performing fault and event analysis in electrical substations, in accordance with an embodiment of the present disclosure.

In an embodiment of the present disclosure, the environment 100 may comprise a plurality of electrical substations 101a, 101b,... 101n, a network 103, a fault analysis unit 105, a Machine learning module 107, a knowledge database 109, and an expert administrator 110. The fault analysis unit 105 may comprise a rules-based engine unit that infers from knowledge database 109 to extract the cause of the fault from the knowledge database 109 and to dynamically update the knowledge database 109 based on feedback from the expert administrator 110.

The plurality of electrical substations 101a, 101b,... 101n may provide their respective disturbance record '1', disturbance record '2', ... disturbance record 'n' to the fault analysis unit 105 for predicting fault type and determining exact and probable causes for occurrence of the fault.

The fault analysis unit 105 may be in communication with the ML module 107 that is trained for predicting the fault type from the disturbance record received from the electrical substation. The ML module 107 may be trained using a plurality of disturbance records from multiple stations. The training of the ML module 107 is discussed in further detail in below aspects.

The fault analysis unit 105 may be in communication with the knowledge database 109 for retrieving the probable and exact causes for a particular fault type predicted by the ML module 107. In one non-limiting embodiment, the knowledge database 109 may be initially built based one or more expert(s) knowledge. The knowledge database 109 may be dynamically updated based on the feedback from the expert administrator 110. In another non-limiting embodiment, the knowledge database 109 may only be dynamically updated for a predetermined time duration based on the feedback from the expert administrator 110. In yet another non-limiting embodiment, the knowledge database 109 may be dynamically updated at regular time interval based on the feedback from the expert administrator 110.

In an embodiment of the present disclosure, the fault analysis unit 105 may be configured to provide the fault type, the plurality of probable causes, and the at least one exact cause for a disturbance record of the electrical substation. The fault analysis unit 105 may provide the fault type, the plurality of probable causes, and the at least one exact cause to the user or the expert administrator 110. In one non-limiting embodiment, the fault analysis unit 105 may update/retrain the ML module 107 for predicting exact fault type based on the feedback received from the user/ the expert administrator 110.

In a non-limiting embodiment, the environment 100 may implemented at a cloud, an edge, a gateway, an Artificial Intelligence (AI) accelerator or a combination thereof. However, the implementation is not limited to above example and may comprise any other implementation known to a person skilled in the art.

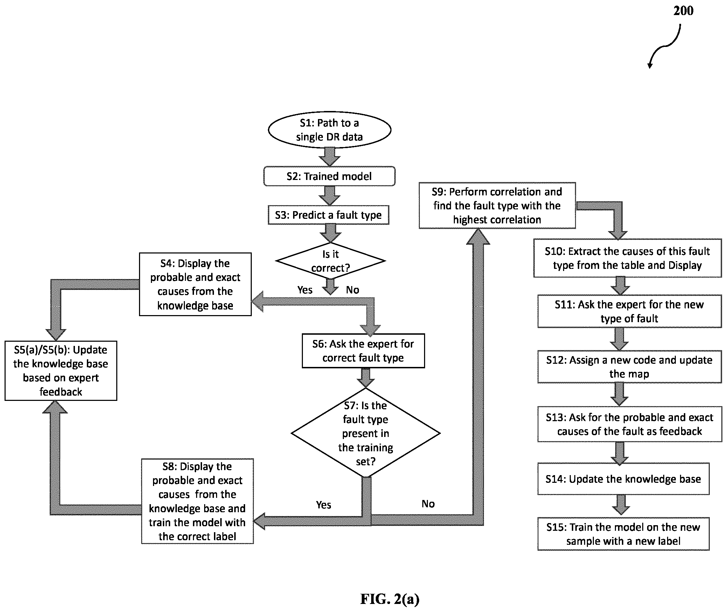

**FIG. 2(a)** illustrates logic flow for performing fault and event analysis in electrical substations, in accordance with an embodiment of the present disclosure.

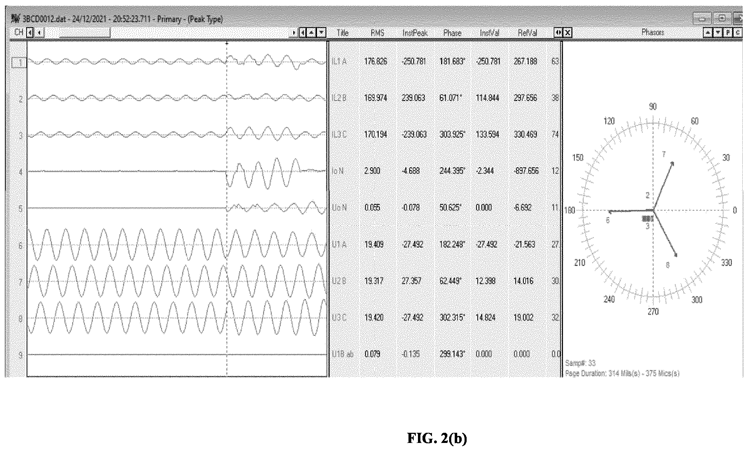

At stage S1, a path to a disturbance record (DR) file is provided. The DR file may be received from an electrical substation. The DR file may be of .dat or .cfg format type or similar. The DR file may comprise time series data of plurality of electrical parameters along with phasor information, as illustrated in fig. 2(b). However, the disturbance record illustration shown in fig. 2(b) is exemplary and may comprise more or less number of parameters and information.

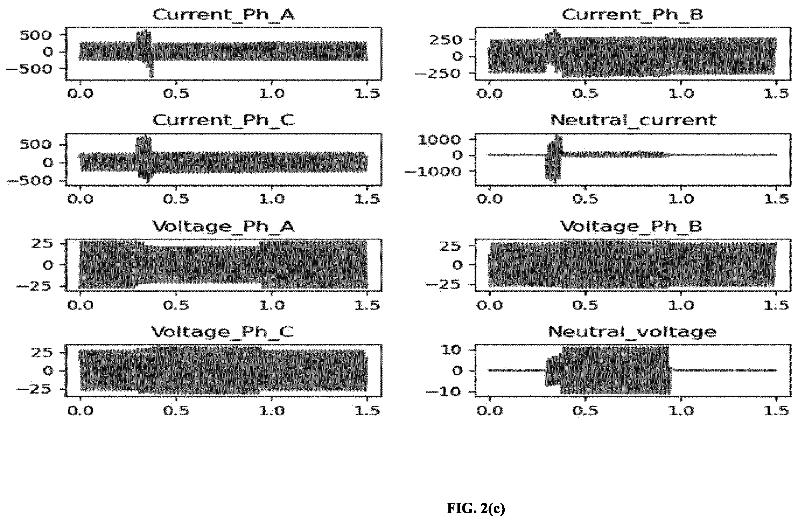

At the same stage S1, the DR file may be preprocessed to extract at least one variable time series data of plurality of electrical parameters that contributes to a fault or an event. The electrical signals/parameters retrieved/extracted from disturbance record may be as illustrated in fig. 2(c). However, the electrical signals/parameters shown in fig. 2(c) is exemplary and may comprise more or less number detailed information of the electrical signals/parameters present in the DR file.

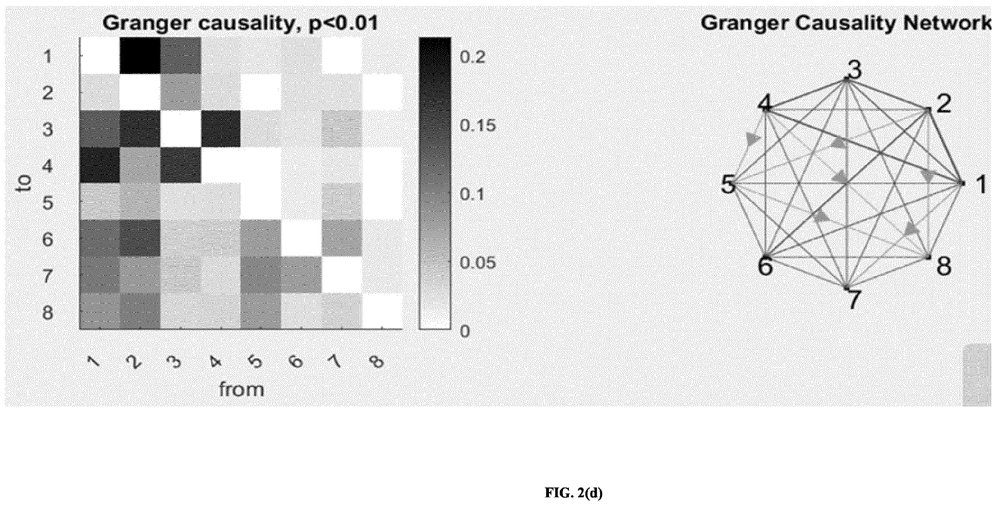

Further, at the same stage S1, causal analysis may be applied to the extracted time series data of plurality of electrical parameters to generate a causality matrix. The causality matrix may include a causal pattern indicating a weight percentage and direction of correlation of each electrical parameter with other electrical parameters, as illustrated by Granger causality plot and causality network shown in fig. 2(d).

At stage S2, the causality matrix generated in the previous stage is provided to a trained Machine Learning (ML) model/module for fault prediction. In one non-limiting embodiment, most causing electrical parameter contributing to the fault and event, may be decided based on the causality matrix. Then, at least one variable time series data of the most causing electrical parameter is analyzed to extract one or more features such as entropy data, time-frequency extraction data, and scattering transform data associated with the most causing electrical parameter. These extracted features may be provided to the trained ML model for prediction.

At stage S3, the trained ML model/module may be configured to predict a fault type based on the extracted features of the most causing electrical parameter. The predicted fault type may be used to decide the exact and probable causes of the fault. The exact and probable causes of the fault may be determined based on the knowledge database and rules-based engine unit, is discussed in detail in below embodiments.

At stage S4, the probable and exact causes may be verified by the expect administrator before displaying to the user. The probable and exact causes may be displayed to the user if the determined probable and exact causes are correct. At stage S5(a), the knowledge database may be updated once the probable and exact causes determined are verified by the expert administrator feedback. In one non-limiting aspect, the knowledge database may be constantly updated based on the expert administrator feedback. In another non-limiting aspect, the knowledge database may be only updated for a limited time duration based on the expert administrator feedback.

At stage S6, if the predicted fault type is incorrect, a correct fault type may be received from the expert administrator. At stage S7, it may be determined whether the correct fault type is already present while training the ML module. If yes, then the ML module may be retrained with correct label of the fault type and the corresponding probable causes and exact causes may be retrieved from the knowledge database and presented to the user, at stage S8. Then, at stage S5(b), the knowledge database may be updated once the probable and exact causes determined are verified by the expert administrator feedback.

In case the fault type received from the expert is not present in the training set of the ML module, then at stage S9 correlation of the extracted features of the DR file with the other fault types may be performed and a fault type with highest correlation is determined and displayed with the probable and exact causes to the user.

In case the fault type obtained from the correlation is not accurate, then at stage S11 a new fault type may be received from the expert. At stage S12, a new code may be assigned to the new fault type and features extracted from the DR file may be mapped against the new fault type in the ML module.

After assignment of the new code, the probable and exact causes of the fault may be received as feedback from the expert administrator, at stage S13.

At stage S14, the probable and exact causes of the new fault type introduced may be received from the expert administrator. Then, the knowledge database may be updated at stage S14, to include the probable and exact causes against the new fault type for future fault and event analysis.

At step S15, the ML module may be trained with one or more sample of the new fault type for future prediction.

Thus, the use of incremental machine learning in conjunction with the rules-based engine and expert feedback integration enables the system to learn from its own performance and continuously improve fault classification accuracy, providing valuable insights for proactive maintenance and system optimization. Further, the intelligent fault detection systems evolve, adapt, and provide accurate and reliable fault identification in complex and dynamic environments.

**FIG. 2(b)** illustrates a disturbance record received from an electrical substation, in accordance with an embodiment of the present disclosure.

As shown in fig. 2(b), the disturbance record may include signal representation of the various electrical parameters monitored at the electrical substation, various statistical value of the electrical parameters, and phase information of each of the electrical parameters. The disturbance record may be captured in a .cfg file or .dat file format. However, the disturbance record is not limited to the parameters and information shown and any other information required for fault or event analysis is well within the scope of present disclosure.

**FIG. 2(c)** illustrates electrical signals/parameters retrieved/extracted from disturbance record received from an electrical substation, in accordance with an embodiment of the present disclosure.

In an embodiment of the present disclosure, the electrical signals/parameters retrieved/extracted from disturbance record may include three phase voltage and three phase current values. In one non-limiting embodiment, the electrical signals/parameters retrieved/extracted from disturbance record may also include neutral voltage and neutral current values.

**FIG. 2(d)** illustrates Granger causality plot and causality network constructed from the electrical signals/parameters present in the disturbance record, in accordance with an embodiment of the present disclosure.

In an embodiment, causal analysis may be applied to the extracted time series data of plurality of electrical parameters of the disturbance record for generating a causality matrix. Fig. 2(d) shows the Granger causality plot which indicates weight percentage and direction of correlation of each electrical parameter with other electrical parameters.

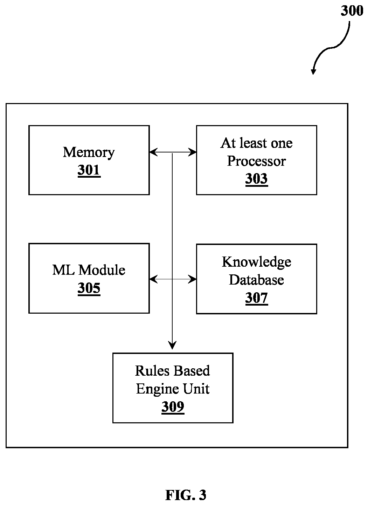

**FIG. 3** illustrates a block diagram representation of system for performing fault and event analysis in electrical substations, in accordance with another embodiment of the present disclosure.

In an embodiment of the present disclosure, the system 300 may comprise a memory 301, at least one processor 303, ML Module 305, knowledge database 307, and rules-based engine unit 309 communicatively coupled with each other. In one non-limiting embodiment, the system 300 may also comprise an input or output module and communication interface (not shown).

It may be noted that, in some embodiments, the system 300 may include more or fewer components than those depicted herein. The various components of the system 300 may be implemented using hardware, software, firmware, or any combinations thereof. Further, the various components of the system 300 may be operably coupled with each other. More specifically, various components of the system 300 may be capable of communicating with each other using communication channel media (such as buses, interconnects, etc.).

In one embodiment, the at least one processor 303 may be embodied as a multi-core processor, a single core processor, or a combination of one or more multi-core processors and one or more single core processors. For example, the processor 303 may be embodied as one or more of various processing devices, such as a coprocessor, a microprocessor, a controller, a digital signal processor (DSP), a processing circuitry with or without an accompanying DSP, or various other processing devices including, a microcontroller unit (MCU), a hardware accelerator, a special-purpose computer chip, or the like.

In one embodiment, the memory 301 is capable of storing machine executable instructions, referred to herein as instructions. In an embodiment, the at least one processor 303 is embodied as an executor of software instructions. As such, the at least one processor 303 is capable of executing the instructions stored in the memory 301 to perform one or more operations described herein.

The memory 301 can be any type of storage accessible to the at least one processor 303 to perform respective functionalities. For example, the memory 301 may include one or more volatile or non-volatile memories, or a combination thereof. For example, the memory 301 may be embodied as semiconductor memories, such as flash memory, mask ROM, PROM (programmable ROM), EPROM (erasable PROM), RAM (random access memory), etc. and the like.

In an embodiment, the ML module 305 and the rules-based engine unit 309 may be configured with internal memory or storage and a processing unit for fault analysis. Some examples of the ML module 305 may include, but not limited to, arithmetic model, neural network, deep neural networks, physics aware model, unsupervised ML model, and the like.

In an embodiment of the present disclosure, the memory 301, at least one processor 303, the ML module 305, and the rules-based engine unit 309 may perform all the functionalities of the fault analysis unit 105, as discussed in above embodiments.

The at least one processor 303 may be configured to receive a disturbance record triggered by an intelligent electronic device (IED) at an electrical substation. In one non-limiting embodiment, the disturbance record may be retrieved from the cloud for further analysis. The disturbance record may be in the form of .cfg file or .dat file. However, the file format of the disturbance record is not limited to above example and any other file format known to a person skilled in the art is well within the scope of present disclosure.

The at least one processor 303 may be then configured to extract at least one variable time series data of plurality of electrical parameters based on the received disturbance record, as shown in fig. 2(b). The extraction may include preprocessing of the received disturbance record. The plurality of electrical parameters may at least comprise a parameter contributing to a fault or an event. In an embodiment, the extracted time series data may be stored in .csv file.

The at least one processor 303 may be then configured to apply causal analysis to the extracted time series data and generate a causality matrix based on the extracted at least one variable time series data. In one non-limiting embodiment, the application of the causal analysis to the extracted time series data includes the at least one processor 303 to apply granger causal analysis to the extracted time series data, as shown in fig. 2(d).

The at least one processor 303 may be then configured to predict, using a Machine learning (ML) module, a fault type at least based on the causality matrix. The training of the ML module is discussed in detail in below embodiments.

To predict a fault type at least based on the causality matrix, the at least one processor 303 may be configured to determine most causing electrical parameter contributing to the fault and event based on the causality matrix and analyze at least one variable time series data of the most causing electrical parameter to extract one or more features. The one or more extracted features at least comprise entropy data, time-frequency extraction data, and scattering transform data associated with the most causing electrical parameter. The at least one processor 303 may be then configured to provide the extracted features to the ML module to predict the fault type. In one non-limiting embodiment, the feature extraction may include, but not limited to, the at least one processor 303 configured to perform time frequency analysis and nonlinear dynamics analysis for feature extraction.

The at least one processor 303 along with rules-based engine unit 309 may be configured to retrieve, from a knowledge database, a plurality of probable causes corresponding to the predicted fault type and determine at least one exact cause from the plurality of probable causes based on the causal pattern indicated through the causality matrix.

The at least one processor 303 along with rules-based engine unit 309 may be then configured to provide the fault type, the plurality of probable causes, and the at least one exact cause to a user. In one non-limiting embodiment, the at least one processor 303 may be then configured to provide the fault type, the plurality of probable causes, and the at least one exact cause to the expert administrator for feedback.

In an embodiment of the present disclosure, the at least one processor 303 may be configured to train the ML module 305. For training the ML module 305, the at least one processor 303 may be configured to carry out following procedure.

The at least one processor 303 may be then configured to train the ML using a plurality of disturbance records from one or more electrical substations. To train the ML Module, the at least one processor 303 may be configured to receive a plurality of disturbance records from one or more electrical substations, generate a corresponding time series data record for each disturbance record. The generation may include preprocessing of each disturbance record. The time series data record comprises at least one variable time series data of plurality of electrical parameters present in the respective disturbance record, and the plurality of electrical parameters present in each of the respective disturbance record comprises at least one electrical parameter contributing to the fault and the event.

To train the ML Module, the at least one processor 303 may be further configured to apply causal analysis on each time series data record to generate a causal matrix for each disturbance record, select an electrical parameter contributing to the fault and event in each disturbance record based on the respective time series data record and the respective causal matrix, perform feature extraction on time series data of the selected electrical parameter for each disturbance record, store one or more extracted features and the selected electrical parameter against each disturbance record to form a dataset, and apply clustering technique to cluster one or more dataset.

In an embodiment of the present disclosure, the clustering may be performed base density-based clustering technique to make use of 'Gower distance' to find the clusters. Since the dataset was initially unlabelled, the at least one processor 303 may assign a fault type to each label that was obtained after clustering. In one non-limiting embodiment, the clustering may be a unsupervised clustering. However, the clustering is not limited to above mentioned clustering technique and any other clustering technique known to a person skilled in the art is well within the scope of the present disclosure.

In an embodiment, the fault type may be labelled as shown in Table-1 below.

**Table-1**

| **Code** | **Fault Type** |
|---|---|
| 0 | Earth Fault |
| 1 | Overcurrent Fault |
| 2 | Short Circuit Fault |
| 3 | Overvoltage Fault |
| 4 | Open Circuit Fault |

In an embodiment of the present disclosure, the at least one processor 303 may be further configured to train the ML module with the labelled dataset based on the labelled dataset.

In an embodiment of the present disclosure, the at least one processor 303 along with rules-based engine unit 309 may be configured to receive, from an expert administrator, at least one feedback on one or more of: the fault type, the plurality of probable causes, and the at least one exact cause, and retrain the ML module and/or updating the knowledge database at least based on the received feedback.

In an embodiment of the present disclosure, the at least one processor 303 is configured to receive, from the expert administrator, a correct fault type for the at least one fault, determine whether the correct fault type matches a labelled fault type, and retrain the ML module with the correct fault type, if the correct fault type matches the labelled fault type. If the correct fault type does not matches the labelled fault type, the at least one processor 303 may be configured to label the correct fault type as a new fault type, receive one or more probable causes and an exact cause corresponding to the or the correct fault type from the expert administrator, update the knowledge database with the one or more probable causes and the exact cause for the new fault type, and train the ML module with the new fault type.

In an embodiment of the present disclosure, the at least one processor 303 is configured to receive additional probable causes and/or correct exact cause for the corresponding fault type and update the knowledge database with additional probable causes and/or correct exact cause for the corresponding fault type.

In a non-limiting embodiment, the system 300 may implemented at a cloud, an edge, a gateway, an Artificial Intelligence (AI) accelerator or a combination thereof. However, the implementation is not limited to above example and may comprise any other implementation known to a person skilled in the art.

Thus, the system 300 facilitates use of incremental machine learning in conjunction with the rules-based engine and expert feedback integration. This enables the system 300 to learn from its own performance and continuously improve fault classification accuracy, providing valuable insights for proactive maintenance and system optimization. Further, the system 300 evolve, adapt, and provide accurate and reliable fault identification in complex and dynamic environments.

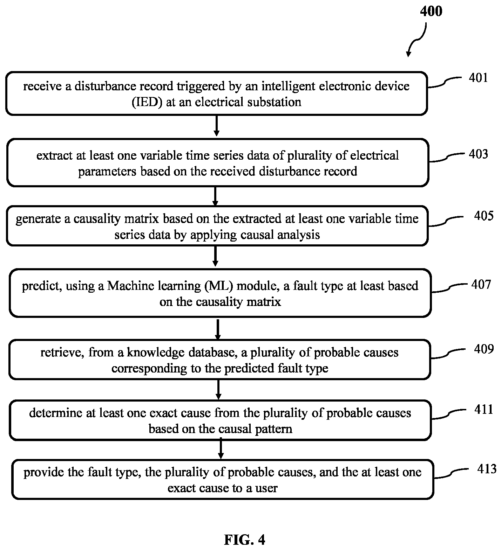

**FIG. 4** is a flowchart illustrating a method for performing fault and event analysis in electrical substations, in accordance with an embodiment of the present disclosure.

The method 400 depicted in the flow diagram may be performed by, for example, the at least one processor 303 shown in Fig. 3. Operations of the flow diagram, and combinations of operation in the flow diagram, may be implemented by, for example, hardware, firmware, a processor, circuitry and or a different device associated with the execution of software that includes one or more computer program instructions. The operations of the method 400 may also be performed by the fault analysis unit 105 shown in fig. 1. It is noted that the operations of the method 400 can be described and or practiced by using one or more processors of a system or device other than discussed in above embodiments.

At step 401, the method 400 discloses receiving a disturbance record triggered by an intelligent electronic device (IED) at an electrical substation. In one non-limiting embodiment, the disturbance record may be retrieved from the cloud for further analysis. The disturbance record may be in the form of .cfg file or .dat file. However, the file format of the disturbance record is not limited to above example and any other file format known to a person skilled in the art is well within the scope of present disclosure.

At step 403, the method 400 discloses extracting at least one variable time series data of plurality of electrical parameters based on the received disturbance record, as shown in fig. 2(b). The exacting may include preprocessing of the received disturbance record. The plurality of electrical parameters may at least comprise a parameter contributing to a fault or an event. In an embodiment, the extracted time series data may be stored in .csv file.

At step 405, the method 400 discloses generating a causality matrix based on the extracted at least one variable time series data by applying causal analysis. In one non-limiting embodiment, the application of the causal analysis to the extracted time series data includes the at least one processor 303 to apply granger causal analysis to the extracted time series data, as shown in fig. 2(d).

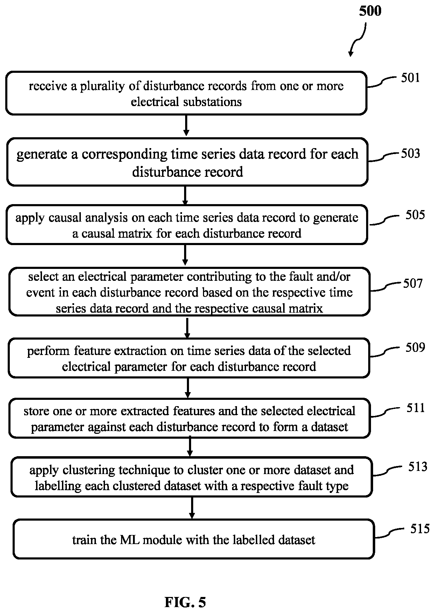

At step 407, the method 400 discloses predicting, using a Machine learning (ML) module, a fault type at least based on the causality matrix. The training of the ML module is discussed in detail in below embodiments in reference with fig. 5.

For predicting the fault type at least based on the causality matrix, the method 400 discloses determining most causing electrical parameter contributing to the fault and event based on the causality matrix and analyzing at least one variable time series data of the most causing electrical parameter to extract one or more features. The one or more extracted features at least comprise entropy data, time-frequency extraction data, and scattering transform data associated with the most causing electrical parameter. For predicting the fault type at least based on the causality matrix, the method 400 discloses providing the extracted features to the ML module to predict the fault type. In one non-limiting embodiment, the feature extraction may include, but not limited to, performing time frequency analysis and nonlinear dynamics analysis for feature extraction.

At step 409, the method 400 discloses retrieve, from a knowledge database, a plurality of probable causes corresponding to the predicted fault type. At step 411, the method 400 discloses determining at least one exact cause from the plurality of probable causes based on the causal pattern indicated through the causality matrix.

At step 413, the method 400 discloses providing the fault type, the plurality of probable causes, and the at least one exact cause to a user. In one non-limiting embodiment, the method 400 discloses providing the fault type, the plurality of probable causes, and the at least one exact cause to the expert administrator for feedback.

In an embodiment of the present disclosure, the method 400 further discloses receiving, from an expert administrator, at least one feedback on one or more of: the fault type, the plurality of probable causes, and the at least one exact cause, and retraining the ML module and/or updating the knowledge database at least based on the received feedback.

In an embodiment of the present disclosure, the method 400 discloses receiving, from the expert administrator, a correct fault type for the at least one fault, determining whether the correct fault type matches a labelled fault type, and retraining the ML module with the correct fault type, if the correct fault type matches the labelled fault type. If the correct fault type does not matches the labelled fault type, the method 400 discloses labelling the correct fault type as a new fault type, receiving one or more probable causes and an exact cause corresponding to the or the correct fault type from the expert administrator, updating the knowledge database with the one or more probable causes and the exact cause for the new fault type, and training the ML module with the new fault type.

In an embodiment of the present disclosure, the method 400 discloses receiving additional probable causes and/or correct exact cause for the corresponding fault type and updating the knowledge database with additional probable causes and/or correct exact cause for the corresponding fault type.

Thus, the method 400 facilitates use of incremental machine learning in conjunction with the rules-based engine and expert feedback integration. This enables learning from its own performance and continuously improving fault classification accuracy, providing valuable insights for proactive maintenance and system optimization. Further, the method 400 helps the system to evolve, adapt, and provide accurate and reliable fault identification in complex and dynamic environments.

The disclosed method with reference to Fig. 4, or one or more operations of the flow diagram 400 may be implemented using software including computer-executable instructions stored on one or more computer-readable media (e.g., non-transitory computer-readable media, such as one or more optical media discs, volatile memory components (e.g., DRAM or SRAM), or non-volatile memory or storage components (e.g., hard drives or solid-state non-volatile memory components, such as Flash memory components) and executed on a computer (e.g., any suitable computer, such as a laptop computer, net book, Web book, tablet computing device, smart phone, or other mobile computing device). Such software may be executed, for example, on a single local computer.

**FIG. 5** is a flowchart illustrating a method of training a machine learning (ML) model/module for predicting the fault type, in accordance with an embodiment of the present disclosure.

The method 500 depicted in the flow diagram may be performed by, for example, the at least one processor 303 shown in Fig. 3. Operations of the flow diagram, and combinations of operation in the flow diagram, may be implemented by, for example, hardware, firmware, a processor, circuitry and or a different device associated with the execution of software that includes one or more computer program instructions. It is noted that the operations of the method 500 can be described and or practiced by using one or more processors of a system or device other than discussed in above embodiments.

At step 501, the method 500 discloses receiving a plurality of disturbance records from one or more electrical substations. The plurality of disturbance records may be received in the form of .dat or .cfg file. In one non-limiting embodiment, the plurality of disturbance records may be retrieved from the cloud for training the ML module.

At step 503, the method 500 discloses generate a corresponding time series data record for each disturbance record. The generating may include preprocessing of the plurality of disturbance records received from one or more electrical substations. The time series data record comprises at least one variable time series data of plurality of electrical parameters present in the respective disturbance record, and the plurality of electrical parameters present in each of the respective disturbance record comprises at least one electrical parameter contributing to the fault and the event.

At step 505, the method 500 discloses applying causal analysis on each time series data record to generate a causal matrix for each disturbance record. At step 507, the method 500 discloses selecting an electrical parameter contributing to the fault and event in each disturbance record based on the respective time series data record and the respective causal matrix.

At step 509, the method 500 discloses performing feature extraction on time series data of the selected electrical parameter for each disturbance record. In one non-limiting embodiment, the feature extraction may include, but not limited to, performing time frequency analysis and nonlinear dynamics analysis for feature extraction.

At step 511, the method 500 discloses storing one or more extracted features and the selected electrical parameter against each disturbance record to form a dataset. At step 513, the method 500 discloses applying clustering technique to cluster one or more dataset. The clustering may be performed base density-based clustering technique to make use of 'Gower distance' to find the clusters. Since the dataset was initially unlabelled, the at least one processor 303 may assign a fault type to each label that was obtained after clustering. In one non-limiting embodiment, the clustering may be a unsupervised clustering. However, the clustering is not limited to above mentioned clustering technique and any other clustering technique known to a person skilled in the art is well within the scope of the present disclosure.

In an embodiment, the sample fault type may be labelled as shown in Table-1 above.

At step 515, the method 500 discloses train the ML module with the labelled dataset based on the labelled dataset. Thus, the training the ML module facilitates learning from its own performance, continuously improving fault classification accuracy, and providing valuable insights for proactive maintenance and system optimization.

The disclosed method with reference to FIG. 5, or one or more operations of the flow diagram 500 may be implemented using software including computer-executable instructions stored on one or more computer-readable media (e.g., non-transitory computer-readable media, such as one or more optical media discs, volatile memory components (e.g., DRAM or SRAM), or non-volatile memory or storage components (e.g., hard drives or solid-state non-volatile memory components, such as Flash memory components) and executed on a computer (e.g., any suitable computer, such as a laptop computer, net book, Web book, tablet computing device, smart phone, or other mobile computing device). Such software may be executed, for example, on a single local computer.

Various embodiments of the present disclosure provide numerous advantages. Embodiments of the present disclosure provide a system for analyzing cybersecurity postures for an operation technology infrastructure. In addition, the present disclosure provides the system for generating a prioritization sequence for remediation of one or more vulnerable components of each plant.

It will be understood by those within the art that, in general, terms used herein, and are generally intended as "open" terms (e.g., the term "including" should be interpreted as "including but not limited to," the term "having" should be interpreted as "having at least," the term "includes" should be interpreted as "includes but is not limited to," etc.). For example, as an aid to understanding, the detail description may contain usage of the introductory phrases "at least one" and "one or more" to introduce recitations. However, the use of such phrases should not be construed to imply that the introduction of a recitation by the indefinite articles "a" or "an" limits any particular part of description containing such introduced recitation to inventions containing only one such recitation, even when the introductory phrases "one or more" or "at least one" and indefinite articles such as "a" or "an" (e.g., "a" and or "an" should typically be interpreted to mean "at least one" or "one or more") are included in the recitations; the same holds true for the use of definite articles used to introduce such recitations. In addition, even if a specific part of the introduced description recitation is explicitly recited, those skilled in the art will recognize that such recitation should typically be interpreted to mean at least the recited number (e.g., the bare recitation of "two recitations," without other modifiers, typically means at least two recitations or two or more recitations).

While various aspects and embodiments have been disclosed herein, other aspects and embodiments will be apparent to those skilled in the art. The various aspects and embodiments disclosed herein are for purposes of illustration and are not intended to be limiting, with the true scope and spirit being indicated by the following detailed description.

### Referral Numerals:

| **Referral Number** | **Description** |
|---|---|
| 100 | Environment |
| 101a, 101b... 101n | Electrical Substation |
| 103 | Network |
| 105 | Fault Analysis unit |
| 107 | Machine learning (ML) Module |
| 109 | Knowledge Database |
| 110 | Expert Administrator |
| 200 | Logic Flow |
| S1, S2, S3, S4, S5(a), S5(b), S6, S7, S8, S9, S10, S11, S12, S13, S14, S15 | Stage |
| 300 | System |
| 301 | Memory |
| 303 | At least one Processor |
| 305 | ML Module |
| 307 | Knowledge Database |
| 309 | Rules-based engine unit |
| 400 | Method |
| 401 - 413 | Method steps |
| 500 | Method |
| 501-513 | Method steps |

## Claims

1. A method for performing fault and event analysis in electrical substations, the method comprising:
receiving a disturbance record triggered by an intelligent electronic device (IED) at an electrical substation;
extracting at least one variable time series data of plurality of electrical parameters based on the received disturbance record, wherein the plurality of electrical parameters at least comprises a parameter contributing to a fault or an event;
generating a causality matrix based on the extracted at least one variable time series data by applying causal analysis, wherein the causality matrix comprises a causal pattern indicating a weight percentage and direction of correlation of each electrical parameter with other electrical parameters;
predicting, using a Machine learning (ML) module, a fault type at least based on the causality matrix;
retrieving, from a knowledge database, a plurality of probable causes corresponding to the predicted fault type;
determining at least one exact cause from the plurality of probable causes based on the causal pattern; and
providing the fault type, the plurality of probable causes, and the at least one exact cause to a user.

2. The method as claimed in claim 1, wherein predicting a fault type at least based on the causality matrix comprises:
determining most causing electrical parameter contributing to the fault and event, based on the causality matrix;
analyzing at least one variable time series data of the most causing electrical parameter to extract one or more features, wherein the one or more extracted features at least comprise entropy data, time-frequency extraction data, and scattering transform data associated with the most causing electrical parameter; and
providing the extracted features to the ML module to predict the fault type.

3. The method as claimed in any of the preceding claims, wherein for training the ML Module, the method further comprises:
receiving a plurality of disturbance records from one or more electrical substations;
generating a corresponding time series data record for each disturbance record, wherein the time series data record comprises at least one variable time series data of plurality of electrical parameters present in the respective disturbance record, and wherein the plurality of electrical parameters present in each of the respective disturbance record comprises at least one electrical parameter contributing to the fault or the event;
applying causal analysis on each time series data record to generate a causal matrix for each disturbance record;
selecting an electrical parameter contributing to the fault and event in each disturbance record based on the respective time series data record and the respective causal matrix;
performing feature extraction on time series data of the selected electrical parameter for each disturbance record;
storing one or more extracted features and the selected electrical parameter against each disturbance record to form a dataset;
applying clustering technique to cluster one or more dataset and labelling each clustered dataset with a respective fault type; and
training the ML module with the labelled dataset.

4. The method as claimed in claim 3, further comprising:
receiving, from an expert administrator, at least one feedback on one or more of: the fault type, the plurality of probable causes, and the at least one exact cause; and
retraining the ML module and/or updating the knowledge database at least based on the received feedback.

5. The method as claimed in claim 4, wherein receiving at least one feedback on the fault type comprises:
receiving, from the expert administrator, a correct fault type for the at least one fault;
determining whether the correct fault type matches a labelled fault type;
retraining the ML module with the correct fault type, if the correct fault type matches the labelled fault type; and
if the correct fault type does not matches the labelled fault type:
labelling the correct fault type as a new fault type;
receiving one or more probable causes and an exact cause corresponding to the or the correct fault type from the expert administrator;
updating the knowledge database with the one or more probable causes and the exact cause for the new fault type;
training the ML module with the new fault type.

6. The method as claimed in any of claims 4 - 5, wherein receiving at least one feedback on the plurality of probable causes and/or the at least one exact cause comprises:
receiving additional probable causes and/or correct exact cause for the corresponding fault type; and
updating the knowledge database with additional probable causes and/or correct exact cause for the corresponding fault type.

7. A system for performing fault and event analysis in electrical substations, the system comprising:
a memory;
at least one processor coupled to the memory, wherein the at least one processor is configured to:
receive a disturbance record triggered by an intelligent electronic device (IED) at an electrical substation;
extract at least one variable time series data of plurality of electrical parameters based on the received disturbance record, wherein the plurality of electrical parameters at least comprises a parameter contributing to a fault or an event;
generate a causality matrix based on the extracted at least one variable time series data by applying causal analysis, wherein the causality matrix comprises a causal pattern indicating a weight percentage and direction of correlation of each electrical parameter with other electrical parameters;
predict, using a Machine learning (ML) module, a fault type at least based on the causality matrix;
retrieve, from a knowledge database, a plurality of probable causes corresponding to the predicted fault type;
determine at least one exact cause from the plurality of probable causes based on the causal pattern; and
provide the fault type, the plurality of probable causes, and the at least one exact cause to a user.

8. The system as claimed in claim 7, wherein to predict a fault type at least based on the causality matrix, the at least one processor is configured to:
determine most causing electrical parameter contributing to the fault and event based on the causality matrix;
analyze at least one variable time series data of the most causing electrical parameter to extract one or more features, wherein the one or more extracted features at least comprise entropy data, time-frequency extraction data, and scattering transform data associated with the most causing electrical parameter; and
provide the extracted features to the ML module to predict the fault type.

9. The system as claimed in any of claims 7 - 8, wherein to train the ML Module, the at least one processor is configured to:
receive a plurality of disturbance records from one or more electrical substations;
generate a corresponding time series data record for each disturbance record, wherein the time series data record comprises at least one variable time series data of plurality of electrical parameters present in the respective disturbance record, and wherein the plurality of electrical parameters present in each of the respective disturbance record comprises at least one electrical parameter contributing to the fault and the event;
apply causal analysis on each time series data record to generate a causal matrix for each disturbance record;
select an electrical parameter contributing to the fault and event in each disturbance record based on the respective time series data record and the respective causal matrix;
perform feature extraction on time series data of the selected electrical parameter for each disturbance record;
store one or more extracted features and the selected electrical parameter against each disturbance record to form a dataset;
apply clustering technique to cluster one or more dataset and label each clustered dataset with a respective fault type; and
train the ML module with the labelled dataset.

10. The system as claimed in claim 9, wherein the at least one processor is configured to:
receive, from an expert administrator, at least one feedback on one or more of: the fault type, the plurality of probable causes, and the at least one exact cause; and
retrain the ML module and/or updating the knowledge database at least based on the received feedback.

11. The system as claimed in claim 10, wherein to receive at least one feedback on the fault type, the at least one processor is configured to:
receive, from the expert administrator, a correct fault type for the at least one fault;
determine whether the correct fault type matches a labelled fault type;
retrain the ML module with the correct fault type, if the correct fault type matches the labelled fault type; and
if the correct fault type does not matches the labelled fault type:
label the correct fault type as a new fault type;
receive one or more probable causes and an exact cause corresponding to the or the correct fault type from the expert administrator;
update the knowledge database with the one or more probable causes and the exact cause for the new fault type;
train the ML module with the new fault type.

12. The system as claimed in any of claims 10 - 11, wherein to receive at least one feedback on the plurality of probable causes and/or the at least one exact cause, the at least one processor is configured to:
receive additional probable causes and/or correct exact cause for the corresponding fault type; and
update the knowledge database with additional probable causes and/or correct exact cause for the corresponding fault type.

13. The system as claimed in any of claims 7 - 12, wherein the system comprises at least one of a cloud, an edge, gateway, Artificial Intelligence (AI) accelerator or a combination thereof.
